# FASCICULE DE BREVET EUROPEEN

(11) **EP 1 382 493 B1**
(45) Date de publication et mention de la délivrance du brevet: **08.06.2005**
(21) Numéro de dépôt: 03015954.5
(22) Date de dépôt: 14.07.2003
(51) Int. Cl.: B60R 11/02

(54) **Dispositif de support et de connexion d'un téléphone portable pour véhicule automobile, et planche de bord équipée d'un tel dispositif**
Aufnahme- und Verbindungsvorrichtung für ein Mobiltelephon in einem Auto sowie Armaturenbrett mit einer solchen Vorrichtung
Support and connecting device for a cellular phone for a car, and a dash board equipped with such a device

(30) Priorité: 18.07.2002 FR 0209124
(43) Date de publication de la demande: 21.01.2004
(73) Titulaire: VALEO SYSTEMES THERMIQUES, 78320 Le Mesnil Saint-Denis (FR)
(72) Inventeur: Dutre, Stéphane, 94100 Saint Maur (FR); Barat, Didier, 78690 Les Essarts le Roi (FR); Nash, Andy, 78120 Clairefontaine (FR); Lucaora, Laurent, 92170 Vanves (FR); Lekmine, Djamel, 91940 Les Ulis (FR); Toussaint, Alain, 78310 Coignieres (FR)

(56) Documents cités:
- DE-A- 4 244 625
- DE-A- 19 707 318
- DE-C- 19 704 572
- US-A- 5 708 833
- US-A1- 2002 025 832

## Description

L'invention se rapporte à un dispositif de support et de connexion d'un téléphone portable pour véhicule automobile et à une planche de bord équipée d'un tel dispositif.

Il est connu dans l'art antérieur d'équiper les véhicules automobiles d'un support de téléphone portable afin notamment de le relier électriquement à un boîtier électronique de manière à établir une connexion pour une utilisation de type « mains libres ». Ce support est typiquement soit fixé sur un élément du cockpit tel que la planche de bord ou la boîte à gants, comme cela est décrit dans EP 1 088 705, soit placé dans ou proche de l'accoudoir central, comme cels est décrit dans FR 2 785 128. US 2002/0025832 A1 décrit un système de communication sans fil avec un support de téléphone et une station d'accueil, cette dernière comprenant un microprocesseur et une carte électronique.

Le support du téléphone étant toujours dissocié du boîtier électronique et la distance entre ces deux éléments étant variable selon les véhicules, un faisceau électrique multi-voies, typiquement spiralé, est nécessaire pour connecter le support au boîtier. Si les cartes électroniques ne se trouvent pas à proximité de la façade du cockpit ou de l'accoudoir et que celles-ci communiquent avec un autre système électronique du véhicule via une onde à haute fréquence (protocole Bluetooth notamment), une antenne haute fréquence doit alors être connectée à ces cartes via un câble coaxial de longueur variable. Si en revanche les cartes électroniques ne se trouvent pas à proximité de la façade du cockpit ou de l'accoudoir et que celles-ci intègrent la fonction de reconnaissance vocale, un microphone doit être connecté à ces cartes via un câble coaxial de longueur variable.

Pour résoudre ces problèmes, tout au moins certains d'entre eux, l'invention propose de rassembler certains organes dans un même ensemble de manière à rendre le dispositif plus compact.

Plus précisément, l'invention a pour objet un dispositif de support et de connexion d'un téléphone portable pour véhicule automobile, comprenant :
- un socle de base adaptable sur une partie d'un habitacle de véhicule,
- au moins une carte électronique reliée à un connecteur par l'intermédiaire d'un faisceau électrique, et
- un support pour un téléphone portable pouvant se raccorder au connecteur,
dans lequel la carte électronique, le connecteur, le faisceau électrique, et le support sont fixés immédiatement à proximité les uns des autres sur le socle de base et le support du téléphone portable est directement raccordé au connecteur, de telle sorte que la distance séparant le support de la carte électronique est fixe.

Selon des modes préférés de réalisation de l'invention :
- la carte électronique, le connecteur et le support de téléphone portable sont fixés au socle de base à l'aide de clips ;
- la carte électronique, le connecteur et le faisceau électrique forment un ensemble unitaire indépendant du support et du socle de base ;
- le support de téléphone est équipé d'un connecteur pour assurer une fonction de communication et/ou une liaison énergétique avec le téléphone portable ;
- le support ou le socle de base est en outre muni d'un microphone relié à la carte électronique afin de permettre un fonctionnement du téléphone portable en mode mains libres ;
- le support ou le socle de base est muni d'un module de communication sans fil, par exemple à la norme Bluetooth.

De manière avantageuse, le support du dispositif se présente :
- soit sous la forme d'une niche ouverte, amovible ou non, incorporable notamment dans une face avant d'une planche de bord de véhicule automobile ;
- soit sous la forme d'un tiroir coulissant incorporable notamment dans une face avant d'une planche de bord de véhicule automobile ;
- ou encore monté pivotant autour d'un axe du socle de base pour passer d'une première position ouverte dans laquelle il est possible d'installer le téléphone portable sur ledit support en vue de le connecter au socle de base, vers une seconde position fermée dans laquelle le téléphone portable est connecté au socle de base tout en étant inaccessible de l'extérieur dudit support.

L'invention se rapporte également à une planche de bord de véhicule automobile équipée d'un dispositif de support et de connexion d'un téléphone portable tel que décrit précédemment.

D'autres caractéristiques, détails et avantages de l'invention ressortiront à la lecture de la description faite en référence aux dessins annexés donnés à titre d'exemple qui représentent respectivement :
- la figure 1, une vue en perspective éclatée d'un dispositif de support et de connexion d'un téléphone portable pour véhicule automobile, conformément à la présente invention ;
- la figure 2, une vue de détail de la figure 1 ; et
- les figures 3 à 6, des vues schématiques de différents modes de réalisation du dispositif de l'invention.

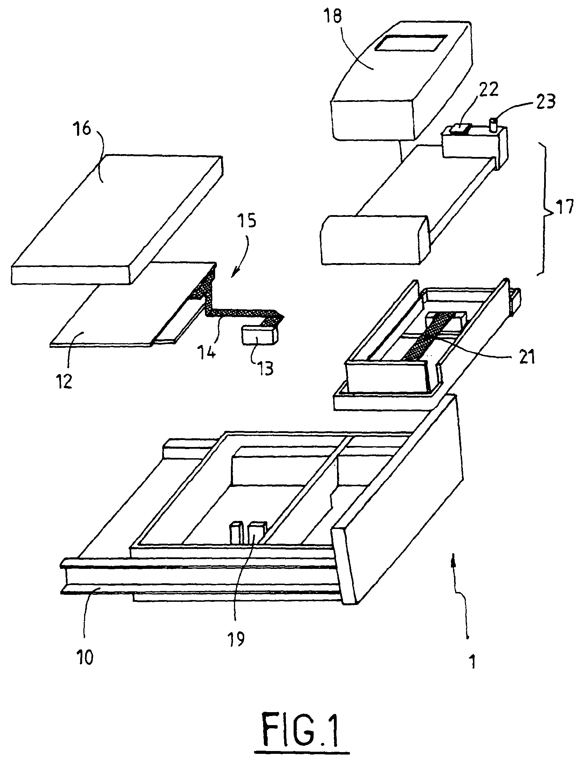

La figure 1 représente ne vue en perspective éclatée un dispositif 1 de support et de connexion pour téléphone portable selon la présente invention.

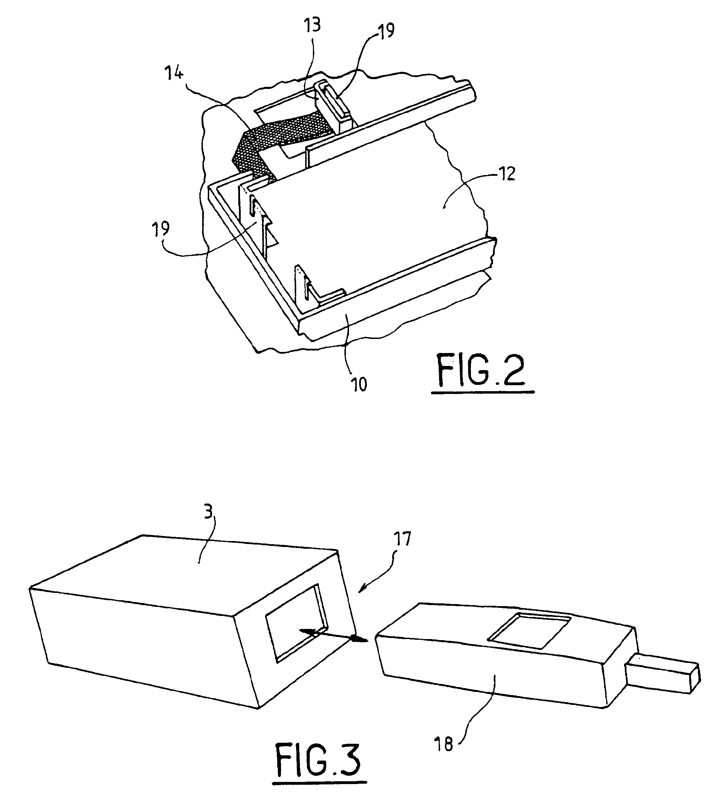

Ce dispositif 1 comprend un socle de base 10 réalisé en matière plastique moulée. Le dispositif 1 est prévu pour s'intégrer dans différents endroits de l'habitacle du véhicule : planche de bord, plafonnier, accoudoir, portière, boîte à gants. Il peut prendre différentes formes telles notamment que celles décrites plus loin en relation avec les figures 3 à 6.

Au moins une carte électronique 12 est reliée à un connecteur 13 par l'intermédiaire d'un faisceau électrique 14 de façon à former un ensemble unitaire 15. Cet ensemble unitaire 15 est prévu pour être montée et maintenu en position sur le socle de base 10. L'ensemble unitaire 15 est par ailleurs recouvert d'un couvercle de protection 16. Un support 17 pour téléphone portable 18, réalisé par exemple dans la même matière que le socle de base 10, est également prévu pour être monté et maintenu en position sur le socle 10.

A cet effet, comme cela est illustré par la figure 2, la carte électronique 12, le connecteur 13 et le support 14 sont fixés sur le socle 10 à l'aide de clips 19 de type connu, se présentant par exemple sous la forme de pattes élastiques moulées avec le socle 10 et coopérant avec des protubérances aménagées à cet effet respectivement sur la carte 12, le connecteur 13 et le support 17. La connexion électrique du support 17 à la carte électronique 12 est réalisée lors de la mise en place du support 17 sur le socle de base 10 grâce au connecteur. Ainsi, une fois tous les organes montés les uns à côté des autres sur le socle de base 10, le support 17 de téléphone et la carte électronique 12 sont séparés d'une distance faible et fixe qui est déterminée principalement par la longueur du faisceau électrique 14.

Le support 17 de téléphone 18 est en outre équipé d'un connecteur coaxial 21 pour assurer une fonction de communication avec la carte électronique 12, par exemple de type main libre. Ce connecteur coaxial 21 peut également servir de liaison énergétique avec un dispositif non représenté de recharge du téléphone 18.

Le support 17 peut également être muni d'un microphone 22 relié à la carte électronique 12 pour assurer la fonction main libre, la voix de l'interlocuteur pouvant alors être amplifiée par des haut-parleurs du véhicule dans lequel est installé le dispositif 1.

Enfin, le socle 10 ou le support 17 est muni d'un module de communication interne 23 pour des applications de communication sans fil à courte ou moyenne portée utilisant par exemple la norme internationale Bluetooth.

Les figures 3 à 6 illustrent différents modes de réalisation du dispositif conformément à l'invention, et en particulier de son support 17 de téléphone portable.

Ainsi, sur la figure 3, le support 17 se présente sous la forme d'une niche ouverte 2, amovible ou non, incorporable par exemple dans une face avant d'une planche de bord de véhicule automobile en remplacement ou à côté d'un lecteur CD, ou bien encore dans un accoudoir ou dans une portière.

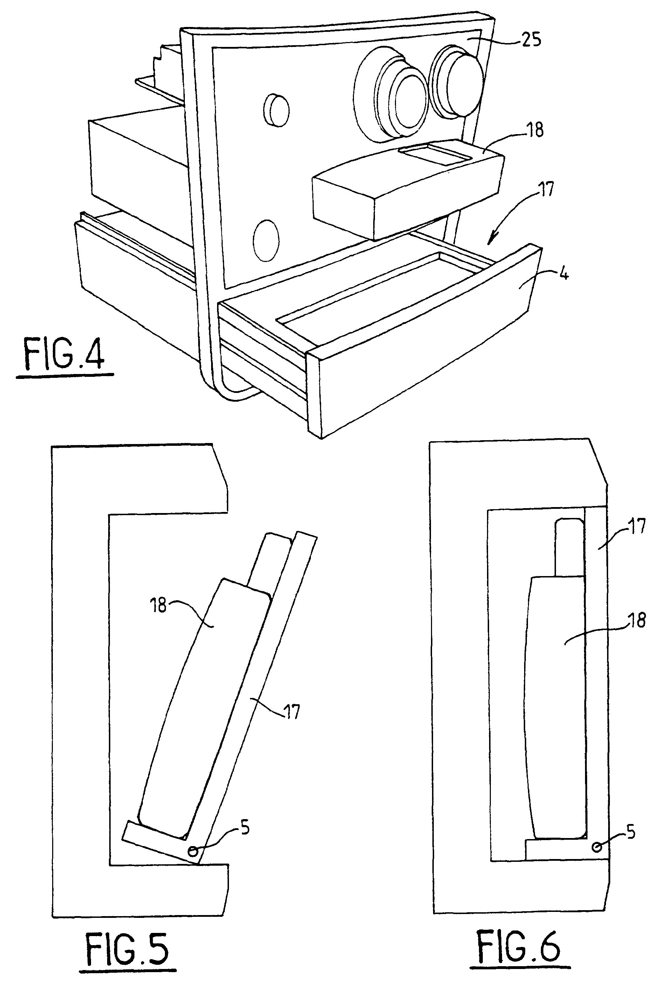

Sur la figure 4, le support 17 se présente sous la forme d'un tiroir coulissant 3 incorporable dans la face avant d'une planche de bord 25. Il permet ainsi de connecter et de ranger le téléphone 18 tout en permettant son fonctionnement en mode main libre, si cela est désiré, notamment en interdisant l'utilisation de son clavier de son microphone et de son écouteur.

Sur les figures 5 et 6, le support 1 est pivotant autour d'un axe 5 solidaire du socle 10, lequel est monté par exemple dans un accoudoir central. Le support 17 peut ainsi prendre une première position ouverte illustrée par la figure 5 dans laquelle il est possible d'installer le téléphone portable 18 sur le support afin de le relier au socle de base, et une seconde position fermée, ou rabattue, illustrée par la figure 6 et dans laquelle le téléphone portable 18 est relié au socle de base mais est inaccessible de l'extérieur pour permettre un fonctionnement en mode mains libres plus sécurisant pour le conducteur.

Il doit être bien entendu toutefois que ces exemples sont donnés uniquement à titre d'illustration de l'objet de l'Invention dont ils ne constituent en aucune manière une limitation.

Ainsi, il peut y avoir une pluralité de cartes électroniques 12 reliées entre elles et au support 17 du téléphone 18 par plusieurs faisceaux 14 et un seul connecteur 13.

On peut prévoir que le dispositif 1 serve également de support à un ordinateur de poche type PDA de façon à assurer une communication téléphonique sans fil avec le téléphone 17 afin d'échanger des informations ou de naviguer sur Internet.

## Revendications

1. Dispositif (1) de support et de connexion d'un téléphone portable (18) pour véhicule automobile, comprenant :
- un socle de base (10) adaptable sur une partie d'un habitacle de véhicule,
- au moins une carte électronique (12) reliée à un connecteur (13) par l'intermédiaire d'un faisceau électrique (14), et
- un support (17) pour un téléphone portable (18) pouvant se raccorder au connecteur (13),
**caractérisé en ce que** la carte électronique (12), le connecteur (13), le faisceau électrique (14), et le support (17) sont fixés immédiatement à proximité les uns des autres sur le socle de base (10) et le support (17) de téléphone est directement raccordé au connecteur (13), de telle sorte que la distance séparant le support (10) de la carte électronique (12) est fixe.

2. Dispositif selon la revendication 1, dans lequel la carte électronique (12), le connecteur (13) et le support (17) de téléphone sont fixés au socle de base (10) à l'aide de clips (19).

3. Dispositif selon l'une quelconque des revendications précédentes, dans lequel la carte électronique (12), le connecteur (13) et le faisceau électrique (14) forment un ensemble unitaire (15) indépendant du support (17) de téléphone (18) et du socle de base (10).

4. Dispositif selon l'une quelconque des revendications précédentes, dans lequel le support (17) de téléphone est équipé d'un connecteur (21) pour assurer une fonction de communication et/ou une liaison énergétique avec le téléphone portable (18).

5. Dispositif selon l'une quelconque des revendications précédentes, dans lequel le support (17) ou le socle de base (10) est en outre muni d'un microphone (22) relié à la carte électronique (12) afin de permettre un fonctionnement du téléphone portable (18) en mode mains libres.

6. Dispositif selon l'une quelconque des revendications précédentes, dans lequel le support (17) ou le socle de base (10) est muni d'un module électronique de communication sans fil (23),

7. Dispositif selon la revendication 6, dans lequel le module de communication sans fil (23) est conforme à la norme Bluetooth.

8. Dispositif selon l'une quelconque des revendications précédentes, **caractérisé en ce que** le support (17) se présente sous la forme d'une niche ouverte (2) incorporable dans une face avant d'une planche de bord (25) de véhicule automobile.

9. Dispositif selon l'une quelconque des revendications 1 à 7, **caractérisé en ce que** le support (17) se présente sous la forme d'un tiroir coulissant (3) incorporable dans une face avant d'une planche de bord (25) de véhicule automobile.

10. Dispositif selon l'une quelconque des revendications 1 à 7, **caractérisé en ce que** le support (17) est monté pivotant autour d'un axe (5) du socle de base (10) pour passer d'une première position ouverte dans laquelle il est possible d'installer le téléphone portable (18) sur ledit support (17) en vue de le connecter au socle de base (10), vers une seconde position fermée dans laquelle le téléphone portable (18) est connecté au socle de base (10) tout en étant inaccessible de l'extérieur dudit support (17).

11. Planche de bord (25) de véhicule automobile équipée d'un dispositif (1) de support et de connexion d'un téléphone portable selon l'une quelconque des revendications précédentes.

## Patentansprüche

1. Halterungs- und Anschlussvorrichtung (1) für ein Kraftfahrzeug-Mobiltelefon (18), umfassend:
- einen an einen Teil eines Fahrzeuginnenraumes anpassbaren Sockel (10),
- mindestens eine über ein Leitungsbündel (14) mit einem Steckverbinder (13) verbundene Elektronikkarte (12) und
- eine Halterung (17) für ein an den Steckverbinder (13) anschließbares Mobiltelefon (18),
**dadurch gekennzeichnet, dass** die Elektronikkarte (12), der Steckverbinder (13), das Leitungsbündel (14) und die Halterung (17) in unmittelbarer Nähe zueinander auf dem Sockel (10) befestigt sind und die Telefonhalterung (17) direkt an den Steckverbinder (13) angeschlossen ist, sodass der Abstand zwischen der Halterung (10) und der Elektronikkarte (12) fest ist.

2. Vorrichtung nach Anspruch 1, bei dem die Elektronikkarte (12), der Steckverbinder (13) und die Telefonhalterung (17) mit Clips (19) am Sockel (10) befestigt sind.

3. Vorrichtung nach einem der vorhergehenden Ansprüche, bei dem die Elektronikkarte (12), der Steckverbinder (13) und das Leitungsbündel (14) eine von der Halterung (17) des Telefons (18) und dem Sockel (10) unabhängige Einheit (15) bilden.

4. Vorrichtung nach einem der vorhergehenden Ansprüche, bei dem die Telefonhalterung (17) zur Gewährleistung einer Kommunikationsfunktion und/oder oder einer Energieverbindung mit dem Mobiltelefon (18) mit einem Steckverbinder (21) versehen ist.

5. Vorrichtung nach einem der vorhergehenden Ansprüche, bei dem die Halterung (17) oder der Sockel (10) für eine Freisprechfunktion des Mobiltelefons (18) außerdem mit einem an die Elektronikkarte (12) angeschlossenen Mikrophon (22) versehen ist.

6. Vorrichtung nach einem der vorhergehenden Ansprüche, bei dem die Halterung (17) oder der Sockel (10) mit einem drahtlosen Kommunikationsmodul (23) versehen ist.

7. Vorrichtung nach Anspruch 6, bei dem das drahtlose Kommunikationsmodul (23) der Bluetooth-Norm entspricht.

8. Vorrichtung nach einem der vorhergehenden Ansprüche, **dadurch gekennzeichnet dass** die Halterung (17) als geöffnete Nische (2) ausgebildet ist, die in eine Vorderseite einer Kraftfahrzeug-Instrumententafel (25) integriert werden kann.

9. Vorrichtung nach einem der Ansprüche 1 bis 7, **dadurch gekennzeichnet, dass** die Halterung (17) als Auszugsschublade (3) ausgebildet ist, die in eine Vorderseite einer Kraftfahrzeug-Instrumententafel (25) integriert werden kann.

10. Vorrichtung nach einem der Ansprüche 1 bis 7, **dadurch gekennzeichnet, dass** die Halterung (17) um eine Achse (5) des Sockels (10) schwenkbar angeordnet ist, sodass sie von einer ersten geöffneten Position, in der das Mobiltelefon (18) zum Anschluss an den Sockel (10) auf der Halterung (17) installiert werden kann, in eine zweite geschlossene Position, in der das Mobiltelefon (18) an den Sockel (10) angeschlossen ist und von außerhalb der Halterung (17) unerreichbar ist, bewegt werden kann.

11. Kraftfahrzeug-Instrumententafel (25) mit einer Halterungs- und Anschlussvorrichtung (1) für ein Mobiltelefon nach einem der vorhergehenden Ansprüche.

## Claims

1. Device (1) to support and connect a portable telephone (18) in an automobile vehicle, including:
- a support base (10) adaptable to fit on part of a vehicle passenger compartment,
- at least one electronic card (12) connected to a connector (13) via an electrical harness (14), and
- a dock (17) for a portable telephone (18) that can be connected to said connector (13),
wherein said electronic card (12), said connector (13), said electrical harness (14) and said telephone dock (17) are mounted immediately next to each other on said support base (10) and said telephone dock (17) is connected directly to said connector (13), such that the distance between said support base (10) and said electronic card (12) is fixed.

2. Device according to the claim 1, wherein said electronic card (12), said connector (13) and said telephone dock (17) are fixed to said support base (10) using clips (19).

3. Device according to one of the preceding claims, wherein said electronic card (12), said connector (13) and said electrical harness (14) form a separate unit (15) independent of said dock (17), said telephone (18) and said support base (10).

4. Device according to one of the preceding claims, wherein said telephone dock (17) is equipped with a connector (21) to provide a communication function and/or a power connection for said portable telephone (18).

5. Device according to one of the preceding claims, wherein said telephone dock (17) or said support base (10) is equipped additionally with a microphone (22) connected to said electronic card (12) in order to enable operation of said portable telephone (18) in hands-free mode.

6. Device according to one of the preceding claims, wherein said telephone dock (17) or said support base (10) is equipped with a wireless electronic communication module (23).

7. Device according to the claim 6, wherein said wireless communication module (23) complies with the Bluetooth standard.

8. Device according to one of the preceding claims, wherein said telephone dock (17) has the form of an open recess (2) that can be incorporated in a front panel of an automobile vehicle dashboard (25).

9. Device according to one of claims 1 to 7, wherein said telephone dock (17) has the form of a sliding drawer (3) that can be incorporated in a front panel of an automobile vehicle dashboard (25).

10. Device according to one of claims 1 to 7, wherein said telephone dock (17) is mounted such that it can pivot about an axis (5) of said support base (10) to move from a first open position in which it is possible to place said portable telephone (18) on said telephone dock (17), in order to connect it to said support base (10), to a second closed position in which said portable telephone (18) is connected to said support base (10) but is inaccessible from outside said telephone dock (17).

11. Automobile vehicle dashboard (25) equipped with a support device (1) and portable telephone connection according to one of the preceding claims.
